# EUROPEAN PATENT SPECIFICATION

(11) **EP 2 685 379 B1**
(45) Date of publication and mention of the grant of the patent: **22.09.2021**
(21) Application number: 12175935.1
(22) Date of filing: 11.07.2012
(51) Int. Cl.: G06F 11/07, G06F 11/30

(54) **An integrated supervisory circuit for an automotive electrical component unit**
Integrierte Überwachungsschaltung für eine elektrische Bauteileinheit eines Automobils
Circuit de surveillance intégré pour unité de composants électriques automobiles

(43) Date of publication of application: 15.01.2014
(73) Proprietor: ROHM CO., LTD., Kyoto 615 (JP)
(72) Inventor: Masago, Noriyuki, 47877 Willich (DE); Mladenova, Irina, 47877 Willich (DE)
(74) Representative: Isarpatent

(56) References cited:
- DE-A1-102006 013 381
- US-A1- 2004 034 810
- US-A1- 2009 183 018
- US-A1- 2010 308 868
- US-B1- 6 330 668
- Kerry Lacanette: "Temperature Sensor ICs Simplify Designs", , 31 January 2001 (2001-01-31), XP055443960, ISBN: 978-1-60807-507-2 Retrieved from the Internet: URL:https://pdfserv.maximintegrated.com/en /an/AN694.pdf [retrieved on 2018-01-24]

## Description

The invention relates to an integrated supervisory circuit for an automotive electrical, ECU, which comprises at least one microcontroller.

Functional safety is a key issue for automotive devices, in particular automotive devices used in vehicles. With increasing technological complexity, software contents and mechatronic implementation there is an increasing risk from systematic failures and random hardware failures. Electrical component units ECUs are provided within a vehicle to perform different functions such as locking/unlocking a door or moving a window panel. These electrical component units ECUs comprise microcontroller units or microprocessors to control devices for performing the different functions. Further, there is a risk that a microcontroller unit or microprocessor of the electrical component unit ECU or a sensor connected to the microprocessor has a malfunction which causes that an operation parameter of the microprocessor leaves the predetermined specification range. In conventional electrical component units ECUs the external control units have been used to increase a functional safety with respect to a specific function provided by the microcontroller of the electrical component unit, ECU, and its peripheral components. For example, in a conventional system there can be provided an external watchdog unit monitoring clock frequencies and temperature ranges, respectively. Further, in these conventional systems it may happen that the supervising external unit may itself have a malfunction so that malfunctions of the monitored microcontroller remain undetected. The malfunction of the external monitoring unit may even cause a reaction of the system although the monitored operation parameters of the supervised microcontroller are still in an admissible specification range. Moreover, the faulty external monitoring unit which supervises the microcontroller of the electrical component unit ECU may cause a reaction which is itself critical to the functional safety of the system.

US 2009/183018 A1 describes an electronic control apparatus for vehicles, comprising a main microcomputer which is activated when a given activation condition is met and a sub-microcomputer to which a power control signal controlling power supply to the sub-microcomputer is supplied. A first power supply unit supplies power supply voltage to the main microcomputer for activation. A second power supply unit supplies power supply voltage to the sub-microcomputer for activation when the sub-microcomputer receives the power control signal. The main microcomputer determines whether or not the sub-microcomputer should be made to operate and performs a switchover between output and non-output of the power control signal to the second power supply unit based on the determined results, whereby the power supply to the sub-microcomputer is controlled.

US 2004/034810 A1 describes a method of mutual monitoring of components of a distributed computer system for a safety-relevant application in a motor vehicle.

US 6 330 668 B1 describes an integrated circuit comprising a general circuitry for performing a predetermined function and a protection circuitry, connected to said general circuitry, for resetting said general circuitry if said general circuitry is forced to operate outside of at least one predetermined parameter.

Kerry Lacanette: "Temperature Sensor ICs Simplify Designs", 31 January 2001, XP055443960 describes a temperature sensor, comprising a digital interface that permits communication with a microcontroller, wherein the digital interface is configured to report temperature readings to the microcontroller and to receive instructions from the microcontroller.

US2010308868 A1 describes a clock supervision unit. Accordingly, it is an object of the present invention to provide an apparatus which provides functional safety of the electrical component unit under all circumstances.

This object is achieved by an integrated supervisory circuit comprising the features of claim 1.

Further embodiments are defined by the dependent claims 2-8.

In the following embodiments of the integrated supervisory circuit according to the present invention are described in detail with reference to the enclosed figures.
- Fig. 1: shows a block diagram of an electrical component unit comprising a supervisory integrated circuit according to a possible implementation of the present invention;
- Fig. 2: shows a further block diagram of a further possible embodiment of an electrical component unit comprising an integrated supervisory circuit according to a possible implementation of the present invention;
- Fig. 3: shows a signal operation range diagram for illustrating a possible safety function provided by an integrated supervisory circuit according to the present invention;
- Figs. 4a, 4b, 4c: show signal diagrams for illustrating a further safety function provided by an integrated supervisory circuit according to the present invention.

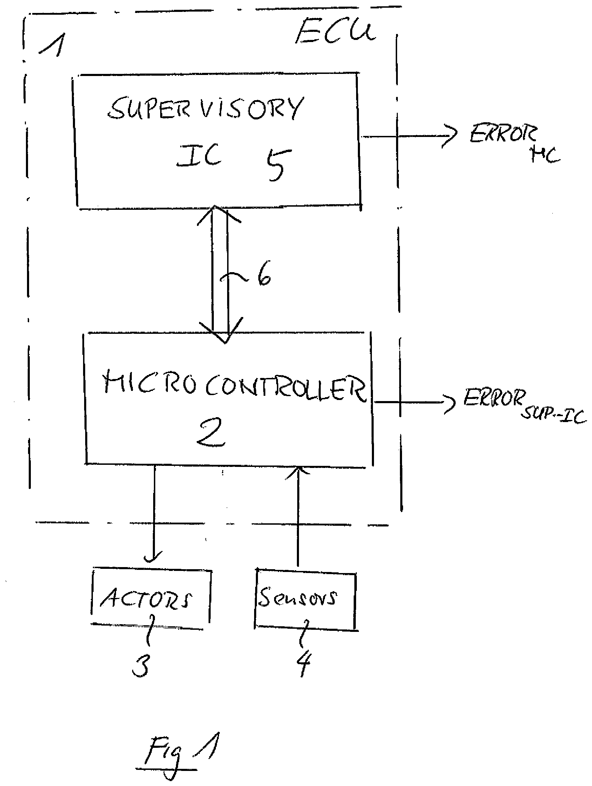

As can be seen from Fig. 1 an electrical component unit, ECU 1, adapted to control functions of automotive devices comprises in the shown implementation at least one microcontroller 2 wherein said microcontroller 2 controls actors 3 of automotive devices by evaluating sensor signals received from sensors 4. The microcontroller 2 is connected to an integrated supervisory circuit 5 via a communication interface 6. The communication interface 6 can comprise a serial peripheral interface SPI. In a further possible embodiment the communication interface 6 can comprise an I²C interface between the supervisory circuit 5 and the microcontroller 2. In the electrical component unit ECU a mutual supervision is performed between said integrated supervisory circuit 5 and said microcontroller 2 through the communication interface 6 which connects the supervisory circuit 5 with the microcontroller 2 to keep the electrical component unit ECU 1 in an admissible operation state. In this way the electrical component unit ECU is protected efficiently against the loss of any functionality during control of automotive devices within a vehicle.

The integrated supervisory circuit 5 controls and supervises the microcontroller 2. The integrated supervisory circuit 5 of the electrical component unit 1 is adapted to output an error signal if a monitored operation parameter of the supervised microcontroller 2 is not within a predetermined specification range.

As shown in Fig. 1 the supervisory integrated circuit 5 generates an ERROR MCU signal if at least one monitored operation parameter of the supervised microcontroller 2 is not within a predetermined specification range. To maximize safety the microcontroller 2 also generates an error signal if the microcontroller detects a malfunction of the corresponding integrated supervisory circuit 5.

As can be seen in Fig. 1 the microcontroller 2 generates an error signal ERROR_{SUP-IC} indicating a malfunction of the corresponding integrated supervisory circuit 5.

In a possible implementation of the integrated supervisory circuit 5 according to the present the error signal generated by the integrated supervisory circuit 5 can also encode which kind or type of error has occurred in the microcontroller 2. Further, the error signal generated by the microcontroller 2 in case that the integrated supervisory circuit 5 has a malfunction can also encode a type of the occurred malfunction within the supervisory circuit 5. In a possible embodiment the communication interface 6 can comprise a bus for exchanging signals between the microcontroller 2 and the supervisory integrated circuit 5. This bus enables a bilateral mutual supervising between the microcontroller 2 and the supervisory circuit 5.

In a possible embodiment the electrical component unit ECU can comprise more than one microcontroller 2. In a possible implementation the integrated supervisory circuit 5 is adapted to perform a switch-over from microcontroller 2 to another microcontroller of said electrical component unit ECU 1 if a monitored operation parameter of the supervised microcontroller 2 is not within a predetermined specification range. This embodiment has the advantage that an error in a microcontroller 2 of the electrical component unit 1 is not only detected but that also the operation of the electrical component unit ECU 1 can continue without interruption.

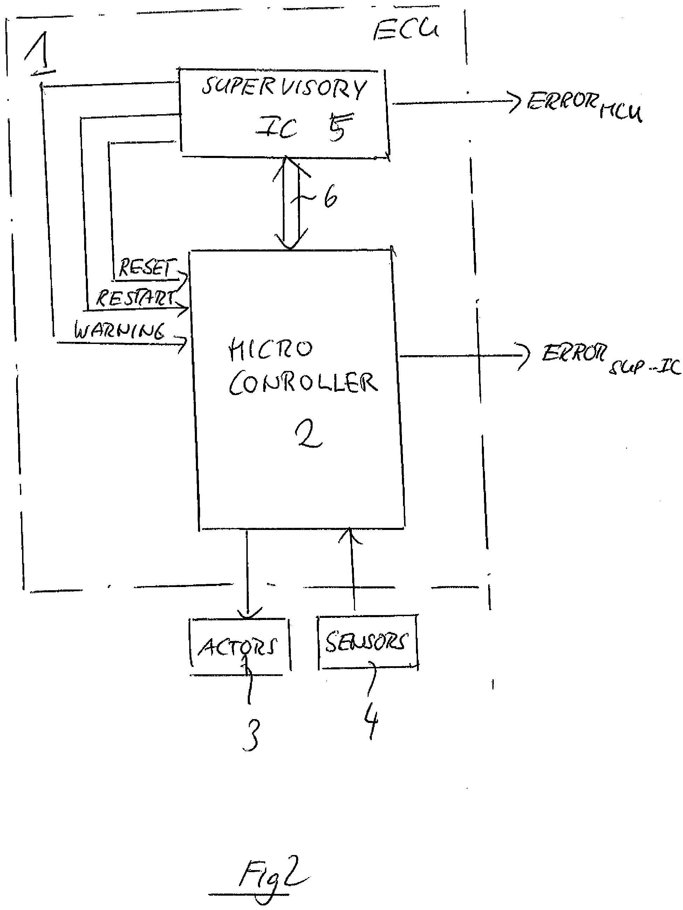

Fig. 2 shows a further possible embodiment of an electrical component unit 1 comprising a microcontroller 2 and a supervisory integrated circuit 5. In this embodiment the integrated supervisory circuit 5 is also adapted to send a reset signal to the microcontroller 2 of the electrical component unit 1 if the integrated supervisory circuit 5 detects an abnormal power supply voltage V_{CC} of the microcontroller 2 being not within a predetermined power supply voltage range [V_{CCmin}, V_{CCmax}].

Moreover, in the embodiment of Fig. 2 the integrated supervisory circuit 5 can also be adapted to restart the microcontroller 2 of said electrical component unit ECU 1 if a clock frequency F_{CLK} of a clock signal CLK received by said integrated supervisory circuit 5 from said microcontroller 2 is not within a predetermined frequency range [F_{CLKmin}, F_{CLKmax}].

In a possible implementation the integrated supervisory circuit 5 can receive the clock signal CLK from the microcontroller 2 via a clock signal line of a bus within the communication interface 6.

The integrated supervisory circuit 5 of the invention is adapted to send a warning signal to the microcontroller 2 of the electrical component unit 1 if the integrated supervisory circuit 5 detects an abnormal temperature of the microcontroller 2 being not within a predetermined temperature range [Tₘᵢₙ, Tₘₐₓ]. In the invention the microcontroller 2 evaluates the received warning signal and performs itself the necessary operations to keep an admissible operation state of the electrical component unit 1.

The microcontroller 2 shown in Figs. 1 or 2 is adapted to control at least one function of an automotive device of a vehicle. The automotive electrical component unit 1 can comprise different automotive devices, in particular an electrical power steering device, an airbag control device, an ABS device, a windscreen wiper control device, a window panel control device, a mirror adjustment control device or a door lock control device of the vehicle. In a possible embodiment the electrical component unit ECU 1 can be actuated in response to a signal generated by a gear key switch of the respective vehicle. The microcontroller 2 of the electrical component unit ECU 1 can form a small computer on a single integrated circuit consisting internally of a central processing unit CPU, a clock generation circuit, timers, peripherals, I/O ports and a memory. Further, a program memory in the form of a non-volatile memory such as flash can be also be included on the chip of the microcontroller 2 as well as a certain amount of random access memory for data. The power supply V_{CC} of the microcontroller 2 can be provided by an embedded voltage regulator and a power management unit. The clock signal CLK can be generated, for example by a phase-locked loop, ring oscillator or a clock tree. The integrated supervisory circuit 5 can in a possible embodiment be integrated on the same chip as the microcontroller 2 being connected to the microcontroller 2 via a serial peripheral interface SPI or an integrated circuit I²C.

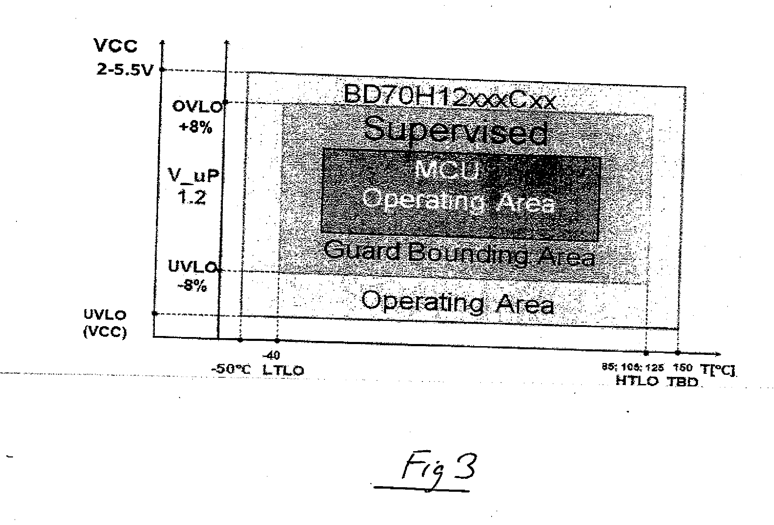

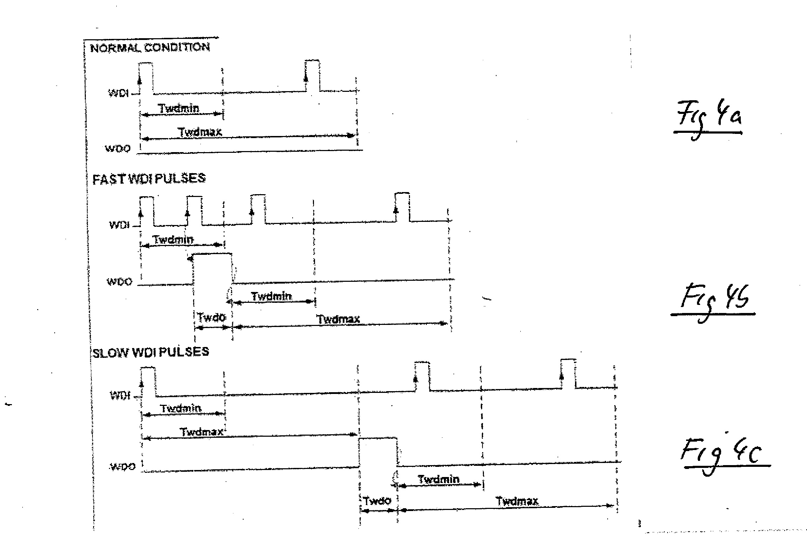

Fig. 3 shows a diagram for illustrating a possible safety feature provided by the integrated supervisory circuit 5 according to the present invention. The diagram of Fig. 3 shows the power supply voltage V_{CC} of the microcontroller unit 2 for different temperatures T. The normal operation range of the microcontroller unit 2 is between a minimum supply voltage V_{CCmin} and a maximum supply voltage V_{CCmax}. For example, if the power supply voltage of the microcontroller becomes higher than the admissible supply voltage the monitored parameter enters a supervised guard bounding area supervised by the supervisory integrated circuit 5. If the supply voltage V_{CC} becomes still higher and also leaves the supervised guard bounding area, for example an overvoltage lockout OVLO the supervisory integrated circuit 5 can generate a reset signal and send it to the microcontroller 2 as shown in Fig. 2. On the other hand, if the supply voltage VCC of the microcontroller 2 falls from a normal operating range through a supervised guard bounding range under a certain predetermined under voltage lockout UVLO the supervisory integrated circuit 5 can also send a reset signal to the microcontroller 2. In the same way, if at a certain supply voltage V_{CC} of the microcontroller 2 the temperature T of the microcontroller 2 leaves a normal operation area and also a supervised guard bounding area, the integrated supervisory circuit can generate in a possible implementation a warning signal to the microcontroller 2 which can be evaluated by the microcontroller 2 to maintain the electrical component unit ECU 1 in an admissible operation range. The integrated supervisory circuit 5 is adapted to send a warning signal to the microcontroller 2 of the electrical component unit ECU 1 if the integrated supervisory circuit 5 detects an abnormal temperature of the microcontroller 2 outside a supervised guard bounding area. Figs. 4a, 4b, 4c show diagrams for illustrating a further safety feature provided by the integrated supervisory circuit 5 according to the present invention. The signal diagrams show a clock signal output by the microcontroller unit MCU 2 within the electrical component unit ECU 1. The first diagram in Fig. 4a shows a normal operation of the clock signal CLK monitored by the supervisory circuit 5. The second diagram in Fig. 4b shows a too high clock frequency. The third diagram in Fig. 4c is a clock signal CLK with a too low clock frequency. The integrated supervisory circuit 5 of the invention is adapted to restart the microcontroller 2 if the clock frequency F_{CLK} of the monitored clock signal CLK received by the integrated supervisory circuit 5 from the microcontroller 2 is not within a predetermined frequency range [F_{CLKmin}, F_{CLKmax}] as shown in the second and third diagram of Fig. 4. The integrated supervisory circuit 5 of the electrical component unit ECU 1 provides a level of security which conforms with safety standards such as the safety standard ISO 26262.

## Claims

1. An integrated supervisory circuit (5) for an automotive electrical component unit, ECU, (1) adapted to control functions of automotive devices, the electrical component unit, ECU, comprising at least
one microcontroller (2),
wherein a mutual supervision is performed between the integrated supervisory circuit (5) and the microcontroller (2) of the electrical component unit, ECU, (1) through a communication interface (6) connecting the supervisory circuit (5) and the microcontroller (2) to keep said electrical component unit, ECU, (1) in an admissible operation state;
wherein the integrated supervisory circuit (5) is adapted to generate a warning signal to the microcontroller (2), the microcontroller (2) being capable to evaluate the warning signal and perform itself the necessary operations to keep an admissible operation state of the electrical component unit, ECU, (1)
**characterised in that** the integrated supervisory circuit (5) is adapted to send the warning signal to the microcontroller (2) of the electrical component unit, ECU, (1) if the integrated supervisory circuit (5) detects an abnormal temperature of the microcontroller (2) being not within a predetermined temperature range, and further **characterised in that** the integrated supervisory circuit (5) is adapted to restart the microcontroller (2) of the electrical component unit, ECU, (1) if a clock frequency of a clock signal received by the integrated supervisory circuit (5) from the microcontroller (2) is not within a predetermined frequency range.

2. The integrated supervisory circuit according to claim 1, wherein said communication interface (6) comprises a serial peripheral interface (SPI) or an I²C interface.

3. The integrated supervisory circuit according to claim 1 or 2,
wherein the microcontroller (2) of said electrical component unit, ECU, (1) is adapted to generate an error signal (ERROR_SUPIC) if the microcontroller (2) detects a malfunction of the corresponding integrated supervisory circuit (5).

4. The integrated supervisory circuit according to claim 3, wherein said integrated supervisory circuit (5) of said electrical component unit, ECU, (1) is adapted to output an error signal (ERROR_MCU) if a monitored operation parameter of the supervised microcontroller (2) is not within a predetermined specification range.

5. The integrated supervisory circuit according to claim 4, wherein said integrated supervisory circuit (5) of said electrical component unit, ECU, (1) is adapted to perform a switch-over to another microcontroller of said electrical component unit, ECU, (1) if a monitored operation parameter of the supervised microcontroller (2) is not within a predetermined specification range.

6. The integrated supervisory circuit according to one of the preceding claims 1 to 5,
wherein said integrated supervisory circuit (5) is adapted to send a reset signal to said microcontroller (2) of said electrical component unit, ECU, (1) if the integrated supervisory circuit (5) detects an abnormal power supply voltage of said microcontroller (2) being not within a predetermined power supply voltage range.

7. An automotive electrical component unit, ECU, (1) comprising
an integrated supervisory circuit (5) according to one of the preceding claims 1 to 6,
and at least one microcontroller (2) adapted to control at least one function of an automotive device of a vehicle.

8. The automotive electrical component unit, ECU, (1) according to claim 7,
wherein said automotive ECU (1) comprises
an electrical power steering, EPS, device,
an ABS device,
an airbag control device,
a windscreen wiper control device,
a window panel control device,
a mirror adjustment control device, and
a door lock control device.

## Patentansprüche

1. Integrierte Überwachungsschaltung (5) für eine elektrische Komponenteneinheit, ECU, (1), eines Fahrzeugs, die ausgelegt ist, um Funktionen von Fahrzeugvorrichtungen zu steuern, wobei die elektrische Komponenteneinheit, ECU, mindestens eine Mikrosteuerung (2) umfasst,
wobei eine gegenseitige Überwachung zwischen der integrierten Überwachungsschaltung (5) und der Mikrosteuerung (2) der elektrischen Komponenteneinheit, ECU, (1) über eine Kommunikationsschnittstelle (6) durchgeführt wird, welche die Überwachungsschaltung (5) und die Mikrosteuerung (2) verbindet, um die elektrische Komponenteneinheit, ECU, (1) in einem zulässigen Betriebszustand zu halten;
wobei die integrierte Überwachungsschaltung (5) ausgelegt ist, um ein Warnsignal an die Mikrosteuerung (2) zu erzeugen, wobei die Mikrosteuerung (2) in der Lage ist, das Warnsignal auszuwerten und selbst die notwendigen Vorgänge durchzuführen, um einen zulässigen Betriebszustand der elektrischen Komponenteneinheit, ECU, (1) zu halten,
**dadurch gekennzeichnet, dass** die integrierte Überwachungsschaltung (5) ausgelegt ist, um das Warnsignal an die Mikrosteuerung (2) der elektrischen Komponenteneinheit, ECU, (1) zu senden, wenn die integrierte Überwachungsschaltung (5) eine anomale Temperatur der Mikrosteuerung (2) erfasst, die nicht innerhalb eines vorbestimmten Temperaturbereichs liegt,
und ferner **dadurch gekennzeichnet, dass** die integrierte Überwachungsschaltung (5) ausgelegt ist, um die Mikrosteuerung (2) der elektrischen Komponenteneinheit, ECU, (1) neu zu starten, wenn eine Taktfrequenz eines Taktsignals, das durch die integrierte Überwachungsschaltung (5) von der Mikrosteuerung (2) empfangen wird, nicht innerhalb eines vorbestimmten Frequenzbereichs liegt.

2. Integrierte Überwachungsschaltung nach Anspruch 1,
wobei die Kommunikationsschnittstelle (6) eine Serial Peripheral Interface (SPI) oder eine I²C-Schnittstelle umfasst.

3. Integrierte Überwachungsschaltung nach Anspruch 1 oder 2,
wobei die Mikrosteuerung (2) der elektrischen Komponenteneinheit, ECU, (1) ausgelegt ist, um ein Fehlersignal (ERROR_SUPIC) zu erzeugen, wenn die Mikrosteuerung (2) eine Fehlfunktion der entsprechenden integrierten Überwachungsschaltung (5) erfasst.

4. Integrierte Überwachungsschaltung nach Anspruch 3,
wobei die integrierte Überwachungsschaltung (5) der elektrischen Komponenteneinheit, ECU, (1) ausgelegt ist, um ein Fehlersignal (ERROR_MCU) auszugeben, wenn ein überwachter Betriebsparameter der überwachten Mikrosteuerung (2) nicht innerhalb eines vorbestimmten Spezifikationsbereichs liegt.

5. Integrierte Überwachungsschaltung nach Anspruch 4,
wobei die integrierte Überwachungsschaltung (5) der elektrischen Komponenteneinheit, ECU, (1) ausgelegt ist, um ein Umschalten auf eine andere Mikrosteuerung der elektrischen Komponenteneinheit, ECU, (1) durchzuführen, wenn ein überwachter Betriebsparameter der überwachten Mikrosteuerung (2) nicht innerhalb eines vorbestimmten Spezifikationsbereichs liegt.

6. Integrierte Überwachungsschaltung nach einem der vorhergehenden Ansprüche 1 bis 5,
wobei die integrierte Überwachungsschaltung (5) ausgelegt ist, um ein Rücksetzsignal an die Mikrosteuerung (2) der elektrischen Komponenteneinheit, ECU, (1) zu senden, wenn die integrierte Überwachungsschaltung (5) eine anomale Versorgungsspannung der Mikrosteuerung (2) erfasst, welche nicht innerhalb eines vorbestimmten Versorgungsspannungsbereichs liegt.

7. Elektrische Komponenteneinheit, ECU, (1) eines Fahrzeugs, umfassend
eine integrierte Überwachungsschaltung (5) nach einem der vorhergehenden Ansprüche 1 bis 6
und mindestens eine Mikrosteuerung (2), die ausgelegt ist, um mindestens eine Funktion einer Fahrzeugvorrichtung eines Fahrzeugs zu steuern.

8. Elektrische Komponenteneinheit, ECU, (1) eines Fahrzeugs nach Anspruch 7,
wobei die Fahrzeug-ECU (1) umfasst:
eine elektrische Servolenkungsvorrichtung, EPS-Vorrichtung,
eine ABS-Vorrichtung,
eine Airbag-Steuervorrichtung,
eine Scheibenwischer-Steuervorrichtung,
eine Fensterscheiben-Steuervorrichtung,
eine Spiegelverstell-Steuervorrichtung und
eine Türverriegelungs-Steuervorrichtung.

## Revendications

1. Circuit de surveillance intégré (5) pour une unité de composants électriques, ECU, automobile (1), adapté pour commander des fonctions de dispositifs automobiles, l'unité de composants électriques, ECU, comprenant au moins un microcontrôleur (2),
dans lequel une surveillance mutuelle est réalisée entre le circuit de surveillance intégré (5) et le microcontrôleur (2) de l'unité de composants électriques, ECU, (1) par le biais d'une interface de communication (6) reliant le circuit de surveillance (5) et le microcontrôleur (2) pour maintenir ladite unité de composants électriques, ECU, (1) dans un état de fonctionnement admissible ;
dans lequel le circuit de surveillance intégré (5) est adapté pour générer un signal d'avertissement au microcontrôleur (2), le microcontrôleur (2) étant capable d'évaluer le signal d'avertissement et de réaliser lui-même les opérations nécessaires pour maintenir un état de fonctionnement admissible de l'unité de composants électriques, ECU, (1)
**caractérisé en ce que**
le circuit de surveillance intégré (5) est adapté pour envoyer le signal d'avertissement au microcontrôleur (2) de l'unité de composants électriques, ECU, (1) si le circuit de surveillance intégré (5) détecte une température anormale du microcontrôleur (2) qui n'est pas dans une plage de temperatures prédéterminée,
et en outre **caractérisé en ce que**
le circuit de surveillance intégré (5) est adapté pour redémarrer le microcontrôleur (2) de l'unité de composants électriques, ECU, (1) si une fréquence d'horloge d'un signal d'horloge reçu par le circuit de surveillance intégré (5) depuis le microcontrôleur (2) n'est pas située dans une plage de fréquences prédéterminée.

2. Circuit de surveillance intégré selon la revendication 1, dans lequel ladite interface de communication (6) comprend une interface périphérique série (SPI) ou une interface I²C.

3. Circuit de surveillance intégré selon la revendication 1 ou 2,
dans lequel le microcontrôleur (2) de ladite unité de composants électriques, ECU, (1) est adapté pour générer un signal d'erreur (ERROR_SUPIC) si le microcontrôleur (2) détecte un dysfonctionnement du circuit de surveillance intégré (5) correspondant.

4. Circuit de surveillance intégré selon la revendication 3, dans lequel ledit circuit de surveillance intégré (5) de ladite unité de composants électriques, ECU, (1) est adapté pour émettre un signal d'erreur (ERROR_MCU) si un paramètre de fonctionnement observé du microcontrôleur (2) surveillé n'est pas situé dans une plage de spécifications prédéterminée.

5. Circuit de surveillance intégré selon la revendication 4, dans lequel ledit circuit de surveillance intégré (5) de ladite unité de composants électriques, ECU, (1) est adapté pour réaliser une commutation vers un autre microcontrôleur de ladite unité de composants électriques, ECU, (1) si un paramètre de fonctionnement observé du microcontrôleur (2) surveillé n'est pas situé dans une plage de spécifications prédéterminée.

6. Circuit de surveillance intégré selon l'une des revendications 1 à 5 précédentes,
dans lequel ledit circuit de surveillance intégré (5) est adapté pour envoyer un signal de réinitialisation audit microcontrôleur (2) de ladite unité de composants électriques, ECU, (1), si le circuit de surveillance intégré (5) détecte une tension d'alimentation anormale dudit microcontrôleur (2) qui n'est pas située dans une plage de tensions d'alimentation prédéterminée.

7. Unité de composants électriques, ECU, automobile (1) comprenant
un circuit de surveillance intégré (5) selon l'une des revendications 1 à 6 précédentes,
et au moins un microcontrôleur (2) adapté pour commander au moins une fonction d'un dispositif automobile d'un véhicule.

8. Unité de composants électriques, ECU, automobile (1) selon la revendication 7,
dans laquelle ladite ECU automobile (1) comprend :
un dispositif de direction assistée électrique, EPS,
un dispositif ABS,
un dispositif de commande de coussin gonflable,
un dispositif de commande d'essuie-glace,
un dispositif de commande de vitre,
un dispositif de commande d'ajustement de rétroviseur, et
un dispositif de commande de verrouillage de portière.
